# EUROPEAN PATENT APPLICATION

(11) **EP 4 542 713 A1**
(43) Date of publication of application: **23.04.2025**
(21) Application number: 23855198.0
(22) Date of filing: 18.08.2023
(51) Int. Cl.: H01M 10/0567, H01M 10/052, H01M 4/38

(54) **LITHIUM SECONDARY BATTERY**

(30) Priority: 18.08.2022 KR 20220103657
(71) Applicant: LG Energy Solution, Ltd., Seoul 07335 (KR)
(72) Inventor: CHO, Yoon Gyo, Daejeon 34122 (KR); LEE, Chul Haeng, Daejeon 34122 (KR); LEE, Kyung Mi, Daejeon 34122 (KR); LEE, Jung Min, Daejeon 34122 (KR); KIM, Eun Bee, Daejeon 34122 (KR); JI, Su Hyeon, Daejeon 34122 (KR); YEOM, Chul Eun, Daejeon 34122 (KR); HAN, Jung Gu, Daejeon 34122 (KR)
(74) Representative: Hoffmann Eitle
(86) International application number: PCT/KR2023/012295
(87) International publication number: WO 2024/039232

(57) **Abstract**

The present invention provides a lithium secondary battery including a negative electrode, a positive electrode positioned opposite to the negative electrode, a separator disposed between the negative electrode and the positive electrode, and a non-aqueous electrolyte, wherein the negative electrode includes a silicon-based active material, the silicon-based active material comprises a compound represented by SiOₓ, wherein 0≤x<2, the non-aqueous electrolyte includes a lithium salt, an organic solvent, and an additive, the additive includes a first additive and a second additive, the first additive includes a coumarin-based compound represented by a specific formula, and the second additive includes at least one of lithium fluoromalonato(difluoro)borate (LiFMDFB), lithium difluoro(oxalato)borate (LiDFOB), lithium difluorophosphate (LiDFP), or lithium difluorobis-(oxalate)phosphate (LiDFOP).

## Description

### [TECHNICAL FIELD]

### CROSS-REFERENCE TO RELATED APPLICATIONS

This application claims priority from Korean Patent Application No. 10-2022-0103657 filed on August 18, 2022, the disclosure of which is incorporated by reference herein.

### TECHNICAL FIELD

The present disclosure relates to a lithium secondary battery.

### [BACKGROUNDART]

Lately, there has been a rapid expansion in the application of lithium secondary batteries to power storage supply of large-area devices such as automobiles and power storage devices, as well as power supply of electronic devices such as electrical, electronic, communication, and computer devices, resulting in a rising demand for high-capacity, high-output, and high-stability secondary batteries.

The lithium secondary batteries are mainly provided with a positive electrode composed of lithium-containing transition metal oxide, a negative electrode responsible for storing lithium, and an electrolyte serving as a medium that delivers lithium ions, and a separator. In this case, the negative electrode may include a negative electrode active material such as a carbon-based active material or a silicon-based active material.

As for the lithium secondary batteries, a film (SEI film) is formed on the positive electrode and/or the negative electrode in an initial activation process, and this may protect the positive electrode and the negative electrode over the running of batteries, and prevent electrolyte consumption caused by side reactions of the electrolyte. When failing to form a solid electrode film on the positive electrode and/or the negative electrode in the initial activation process, there may be degradation in capacity and lifespan.

In particular, among negative electrode active materials, the silicon-based active material is taking center stage as a material exhibiting higher capacity than the carbon-based active material, but the material brings about great changes in volume due to intercalation and deintercalation of lithium. The volume expansion of the silicon-based active material causes a number of issues, such as deterioration in the durability of the pre-formed SEI film, continuous consumption of the electrolyte due to the generation of new negative electrode active materials, and an increase in the thickness of the SEI film, leading to degradation in capacity and lifespan.

### [DISCLOSURE OF THE INVENTION]

### [TECHNICAL PROBLEM]

An aspect of the present invention provides a lithium secondary battery that may form a flexible and highly durable film on a negative electrode containing a silicon-based active material to reduce electrolyte side reactions and improve high-temperature cycle lifespan performance and high-temperature storage performance.

### [TECHNICAL SOLUTION]

According to an aspect of the present invention, there is provided a lithium secondary battery including a negative electrode, a positive electrode positioned opposite to the negative electrode, a separator disposed between the negative electrode and the positive electrode, and a non-aqueous electrolyte, wherein the negative electrode includes a negative electrode active material, the negative electrode active material includes a silicon-based active material, the non-aqueous electrolyte includes a lithium salt, an organic solvent, and an additive, the additive includes a first additive and a second additive, the first additive includes a compound represented by Formula 1 below, and the second additive includes at least one of lithium fluoromalonato(difluoro)borate (LiFMDFB), lithium difluoro(oxalato)borate (LiDFOB), lithium difluorophosphate (LiDFP), or lithium difluorobis-(oxalate)phosphate (LiDFOP).

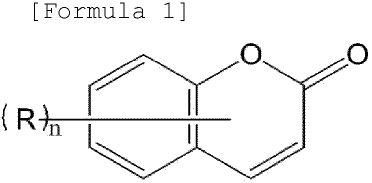

In Formula 1 above, R each independently includes halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer selected from 0 to 6.

### [ADVANTAGEOUS EFFECTS]

A lithium secondary battery according to the present disclosure includes a negative electrode containing a silicon-based active material, and a non-aqueous electrolyte including a first additive which is a coumarin-based compound having a specific structural formula and a second additive containing lithium fluoromalonato(difluoro)borate (LiFMDFB), lithium difluoro(oxalato)borate (LiDFOB), or the like. When both the first additive and the second additive are included in the non-aqueous electrolyte, a flexible, highly restorable, and highly durable film may be formed on the negative electrode. Accordingly, the lithium secondary battery according to the present disclosure forms the SEI film described above in a silicon-based negative electrode that provides concerns over electrolyte side reactions caused by extensive volume expansion to prevent SEI film breakage, the electrolyte side reactions, and an increase in resistance due to an increase in the thickness of the electrode film, and may thus improve performance of the lithium secondary battery, particularly high-temperature cycle lifespan performance and high-temperature storage performance.

### [MODE FOR CARRYING OUT THE INVENTION]

It will be understood that words or terms used in the specification and claims of the present disclosureshall not be construed as being limited to having the meaning defined in commonly used dictionaries. It will be further understood that the words or terms should be interpreted as having meanings that are consistent with their meanings in the context of the relevant art and the technical idea of the disclosure, based on the principle that an inventor may properly define the meaning of the words or terms to best explain the disclosure.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

Meanwhile, prior to describing the present disclosure, unless otherwise specified in the present disclosure, "*" indicates a portion connected between ends of the same or different atoms or formulas.

In addition, as used herein, "a" and "b" in the description of "a to b carbon atoms" indicate the number of carbon atoms included in a specific functional group. That is, the functional group may include "a" to "b" carbon atoms. For example, the term "alkyl group having 1 to 5 carbon atoms" indicates an alkyl group including 1 to 5 carbon atoms, that is, CH₃-, CH₃CH₂-, CH₃CH₂CH₂-, (CH₃)₂CH-, CH₃CH₂CH₂CH₂-, (CH₃)₂CHCH₂-, CH₃CH₂CH_{2C}H_{2C}H₂-, (CH₃)₂CHCH_{2C}H₂-, or the like.

In addition, as used herein, both an alkyl group and an aryl group may be substituted or unsubstituted. Unless otherwise defined, the term "substituted" indicates that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, or the like.

Hereinafter, various aspects of the present invention will be described in more detail.

### Lithium secondary battery

The present disclosure relates to a lithium secondary battery.

Specifically, a lithium secondary battery according to an embodiment of the present invention includes a negative electrode, a positive electrode positioned opposite to the negative electrode, a separator disposed between the negative electrode and the positive electrode, and a non-aqueous electrolyte, wherein the negative electrode includes a negative electrode active material, the negative electrode active material includes a silicon-based active material, the non-aqueous electrolyte includes a lithium salt, an organic solvent, and an additive, the additive includes a first additive and a second additive, the first additive includes a compound represented by Formula 1 below, and the second additive includes at least one of lithium fluoromalonato(difluoro)borate (LiFMDFB), lithium difluoro(oxalato)borate (LiDFOB), lithium difluorophosphate (LiDFP), or lithium difluorobis-(oxalate)phosphate (LiDFOP).

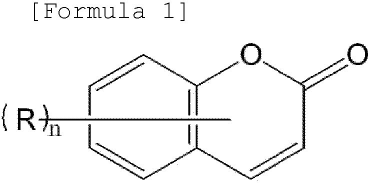

In Formula 1 above, R each independently includes halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer selected from 0 to 6.

The lithium secondary battery according to the present disclosure includes a negative electrode containing a silicon-based active material, and a non-aqueous electrolyte including a first additive and a second additive containing lithium fluoromalonato(difluoro)borate (LiFMDFB), lithium difluoro(oxalato)borate (LiDFOB), or the like. When both the first additive and the second additive are included in the non-aqueous electrolyte, a flexible, highly restorable, and highly durable film may be formed on the negative electrode. Accordingly, the lithium secondary battery according to the present disclosure forms the SEI film described above in a silicon-based negative electrode that provides concerns over electrolyte side reactions caused by extensive volume expansion to prevent SEI film breakage, the electrolyte side reactions, and an increase in resistance due to an increase in the thickness of the electrode film, and may thus improve performance of the lithium secondary battery, particularly high-temperature cycle lifespan performance and high-temperature storage performance.

In this case, the lithium secondary battery of the present disclosure may be manufactured according to a typical method known in the art. For example, a negative electrode, a positive electrode, and a separator between the negative electrode and positive electrode are sequentially stacked to form an electrode assembly, and then the electrode assembly is inserted into a battery case, and a non-aqueous electrolyte according to the present disclosure is injected to manufacture the lithium secondary battery of the present disclosure.

### (1) Negative electrode

The negative electrode includes a negative electrode active material.

The negative electrode active material includes a silicon-based active material.

The silicon-based active material is beneficial as having higher capacity and higher energy density than a carbon-based active material such as graphite, but is unfavorable as exhibiting changes in the volume of the active material upon charging and discharging. The expansion and contraction in the volume of the silicon-based active material causes conductive disconnection in the negative electrode, resulting in increased resistance and decreased lifespan performance. In addition, the SEI film of the negative electrode formed in an activation process of a lithium secondary battery may be broken due to the volume change of the silicon-based active material, and this promotes side reactions of an electrolyte to cause an increase in resistance due to an increase in the thickness of the SEI film and depletion of the electrolyte, resulting in degradation in lifespan performance and storage characteristics.

In order to resolve the limitations, the present disclosure uses a non-aqueous electrolyte in which a first additive and a second additive which will be described later are used as the additive together along with a negative electrode including a silicon-based active material. The using of the combined first and second additives allows the SEI film formed on the negative electrode to have improved flexibility (restorability) and durability, leading to excellent restorability in the volume change of the silicon-based active material, and prevention of SEI film breakage to significantly prevent the electrolyte side reactions and the electrolyte depletion, and accordingly, a lithium secondary battery having excellent lifespan performance and storage performance is obtainable.

The silicon-based active material may include a compound represented by SiOₓ (0≤x<2). As SiO₂ does not react with lithium ions and thus is not able to store lithium, x is preferably within the above range. Specifically, the silicon-based active material may include at least one of Si or SiOₓ (0.7≤x≤1.2, specifically x=1).

The silicon-based active material may have an average diameter (D₅₀) of 1 µm to 30 µm, preferably 2 µm to 15 µm, in terms of ensuring structural stability upon charging and discharging and reducing side reactions with an electrolyte.

The negative electrode active material may further include a carbon-based active material in addition to the silicon-based active material.

The carbon-based active material may include at least one of artificial graphite, natural graphite, hard carbon, soft carbon, carbon black, graphene, or fibrous carbon, and may preferably include at least one of artificial graphite or natural graphite.

The carbon-based active material may have an average diameter (D₅₀) of 10 µm to 30 µm, preferably 15 µm to 25 µm, in terms of ensuring structural stability upon charging and discharging and reducing side reactions with an electrolyte.

When the negative electrode active material includes a silicon-based active material and a carbon-based active material, the silicon-based active material and the carbon-based active material may be in a weight ratio of 1:99 to 50:50, specifically 3:97 to 20:80, and more specifically 3:97 to 10:90.

In an embodiment, the negative electrode active material may not contain a carbon-based active material.

The negative electrode may include a negative electrode current collector and a negative electrode active material layer disposed on at least one surface of the negative electrode current collector. In this case, the negative electrode active material may be included in the negative electrode active material layer.

The negative electrode current collector is not particularly limited as long as it has conductivity without causing chemical changes in batteries. Specifically, copper, stainless steel, aluminum, nickel, titanium, fired carbon, or copper or stainless steel that is surface-treated with carbon, nickel, titanium, silver, or the like may be used as the negative electrode current collector.

The negative electrode current collector may generally have a thickness of 3 µm to 500 µm.

The negative electrode current collector may have fine irregularities formed on a surface thereof to improve bonding strength of a negative electrode active material. For example, the negative electrode current collector may be used in various forms such as a film, a sheet, a foil, a net, a porous body, a foam body, and a non-woven fabric body.

The negative electrode active material layer is disposed on at least one surface of the negative electrode current collector. Specifically, the negative electrode active material layer may be disposed on one surface or both surfaces of the negative electrode current collector.

The negative electrode active material layer may include the negative electrode active material in an amount of 60 wt% to 99 wt%, preferably 75 wt% to 95 wt%.

The negative electrode active material layer may further include a binder and a conductive material, along with the negative electrode active material.

The binder is used to improve the performance of batteries through improved adhesion between the negative electrode active material layer and the negative electrode current collector, and may include, for example, at least any one of a polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, or a material in which hydrogen thereof is substituted with Li, Na, or Ca, or may also include various copolymers thereof.

The negative electrode active material layer may include the binder in an amount of 0.5 wt% to 30 wt%, preferably 1 wt% to 15 wt%, and more preferably 5 wt% to 10 wt%.

The conductive material is not particularly limited as long as it has conductivity without causing chemical changes in batteries, and, for example, a conductive material, such as: graphite such as natural graphite or artificial graphite; carbon black such as acetylene black, Ketjen black, channel black, furnace black, lamp black, or thermal black; conductive fibers such as carbon fibers or metal fibers; conductive tubes such as carbon nanotubes; fluorocarbon; metal powder such as aluminum powder and nickel powder; conductive whiskers such as zinc oxide whiskers or potassium titanate whiskers; conductive metal oxide such as titanium oxide; or polyphenylene derivatives, may be used.

The negative electrode active material layer may include the conductive material in an amount of 0.5 wt% to 30 wt%, preferably, 1 wt% to 25 wt%.

The negative electrode active material may have a thickness of 10 µm to 100 µm, preferably 50 µm to 80 µm.

A negative electrode slurry including a negative electrode active material and/or a binder, a conductive material, and a solvent for forming a negative electrode slurry may be applied onto at least one surface of the negative electrode current collector, and then dried and roll pressed to prepare the negative electrode.

The solvent for forming the negative electrode slurry may include at least one of distilled water, N-methyl-2-pyrrolidone (NMP), ethanol, methanol, or isopropyl alcohol, preferably distilled water, in terms of facilitating the dispersion of, for example, the negative electrode active material, the binder and/or the conductive material.

### (2) Positive electrode

The positive electrode is positioned opposite to the negative electrode.

The positive electrode may include a positive electrode current collector, and a positive electrode active material layer disposed on at least one surface of the positive electrode current collector.

The positive electrode current collector is not particularly limited as long as it has conductivity without causing chemical changes in batteries. To be specific, the positive electrode current collector may include at least one of copper, stainless steel, aluminum, nickel, titanium, fired carbon, or an aluminum-cadmium alloy, and may preferably include aluminum.

The positive electrode current collector may generally have a thickness of 3 µm to 500 µm.

The positive electrode current collector may have fine irregularities formed on a surface thereof to improve bonding strength of a positive electrode active material. For example, the positive electrode current collector may be used in various forms such as a film, a sheet, a foil, a net, a porous body, a foam body, and a non-woven fabric body.

The positive electrode active material layer is disposed on at least one surface of the positive electrode current collector. Specifically, the positive electrode active material layer may be disposed on one surface or both surfaces of the positive electrode current collector.

The positive electrode active material layer may include a positive electrode active material.

The positive electrode active material is a compound capable of reversibly intercalating and deintercalating lithium, and may specifically include a lithium transition metal composite oxide including lithium and at least one transition metal selected from nickel, cobalt, manganese, or aluminum, preferably, a lithium transition metal composite oxide including lithium and transition metal containing nickel, cobalt, or manganese.

For example, the lithium transition metal composite oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1) , LiMn_{2-z}Ni_{z}O₄ (where 0<z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-z1}Co_{z1}O₄ (where 0<z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and S2 are each an atomic fraction of independent elements, wherein 0<p2<1, 0<q2<1, 0<r3<1, 0<S2<1, and p2+q2+r3+S2=1), etc.), and any one thereof or a compound of two or more thereof may be included. Among these, in terms of being able to increase the capacity and stability of a battery, the lithium transition metal composite oxide may be LiCoO₂, LiMnO₂, LiNiO₂, a lithium nickel-manganese-cobalt oxide (e.g., Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05}) O₂, etc.), or the like, and when considering an remarkable improvement effect according to the control of type and content ratio of constituent elements forming a lithium transition metal composite oxide, the lithium transition metal composite oxide may be Li(Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, or Li (Ni_{0.8}Mn_{0.1}Co_{0.1})O₂, or the like, and any one thereof or a mixture of two or more thereof may be used.

More specifically, the positive electrode active material may be a lithium transition metal composite oxide, and may contain nickel in an amount of 60 mol% or greater, with respect to the total number of moles of transition metals included in the lithium transition metal composite oxide. Specifically, the positive electrode active material is a lithium transition metal composite oxide, and the transition metal includes nickel, and at least one selected from manganese, cobalt, or aluminum, and may include nickel in an amount of 60 mol% or greater, specifically 60 mol% to 90 mol%, with respect to the total number of moles of the transition metal. When the lithium transition metal composite oxide using such a high nickel content is used together with the above-described non-aqueous electrolyte, it is preferable for the purpose of reducing by-products in the gas phase generated by structural collapse.

In addition, the positive electrode active material may include a lithium composite transition metal oxide represented by Formula A below.

[Formula A] Li₁₊ₓ(NiₐCo_{b}Mn_{c}M_{d})O₂

In Formula A above, M is at least one of W, Cu, Fe, V, Cr, Ti, Zr, Zn, Al, In, Ta, Y, La, Sr, Ga, Sc, Gd, Sm, Ca, Ce, Nb, Mg, B, or Mo, and 1+x, a, b, c, and d are each an atomic fraction of independent elements(0≤x≤0.2, 0.50≤a<1, 0<b≤0.25, 0<c≤0.25, 0≤d≤0.1, a+b+c+d=1).

Preferably, a, b, c, and d may be 0.70≤a≤0.95, 0.025≤b≤0.20, 0.025≤c≤0.20, and 0≤d≤0.05, respectively.

In addition, a, b, c, and d may be 0.80≤a≤0.95, 0.025≤b≤0.15, 0.025≤c≤0.15, and 0≤d≤0.05, respectively.

In addition, a, b, c, and d may be 0.85≤a≤0.90, 0.05≤b≤0.10, 0.05≤c≤0.10, and 0≤d≤0.03, respectively.

The positive electrode active material layer may include the positive electrode active material in an amount of 80 wt% to 99 wt%, preferably 92 wt% to 98.5 wt%, in consideration of exhibiting sufficient capacity of the positive electrode active material.

The positive electrode active material layer may further include a binder and/or a conductive material together with the above-described positive electrode active material.

The binder is a component that supports the binding of an active material and a conductive material and the binding to a collector, and may specifically include at least one of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, or fluorine rubber, and may preferably include polyvinylidene fluoride.

The binder may be included in an amount of 1 wt% to 20 wt%, preferably 1.2 wt% to 10 wt% in the positive electrode active material layer for the purpose of sufficiently securing the binding strength between components such as the positive electrode active material.

The conductive material may be used to support and improve the conductivity of a secondary battery, and is not particularly limited as long as it has conductivity without causing chemical changes in batteries. Specifically, the positive electrode conductive material may include at least one of graphite such as natural graphite or artificial graphite; carbon black such as acetylene black, Ketjen black, channel black, furnace black, lamp black, or thermal black; conductive fibers such as carbon fibers or metal fibers; conductive tubes such as carbon nanotubes; fluorocarbon; metal powder such as aluminum or nickel powder; conductive whiskers such as zinc oxide or potassium titanate; conductive metal oxides such as titanium oxide; or polyphenylene derivatives, and may preferably include carbon black for the purpose of improving conductivity.

The conductive material may be included in an amount of 1 wt% to 20 wt%, preferably 1.2 wt% to 10 wt%, in the positive electrode active material layer for the purpose of sufficiently securing electrical conductivity.

The positive electrode active material may have a thickness of 30 µm to 400 µm, preferably 40 µm to 110 µm.

A positive electrode slurry including a positive electrode active material and optionally a binder, a conductive material, and a solvent for forming a positive electrode slurry may be applied onto the positive electrode current collector, and then dried and roll pressed to prepare the positive electrode.

The solvent for forming a positive electrode slurry may include an organic solvent such as N-methyl-2-pyrrolidone (NMP). The positive electrode slurry may have a solid content of 40 wt% to 90 wt%, specifically 50 wt% to 80 wt%.

### (3) Separator

A typically used porous polymer film, for example, a porous polymer film prepared from a polyolefin-based polymer, such as an ethylene homopolymer, a propylene homopolymer, an ethylene/butene copolymer, an ethylene/hexene copolymer, or an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present disclosureis not limited thereto. Furthermore, a coated separator including a ceramic component or a polymer component may be used to secure heat resistance or mechanical strength, and the separator having a single layer or multilayer structure may be used.

### (4) Non-aqueous electrolyte

A non-aqueous electrolyte according to the present disclosure includes a lithium salt, an organic solvent, and an additive, the additive includes a first additive and a second additive, the first additive includes a compound represented by Formula 1 below, and the second additive includes at least one of lithium fluoromalonato(difluoro)borate (LiFMDFB), lithium difluoro(oxalato)borate (LiDFOB), lithium difluorophosphate (LiDFP), or lithium difluorobis-(oxalate)phosphate (LiDFOP).

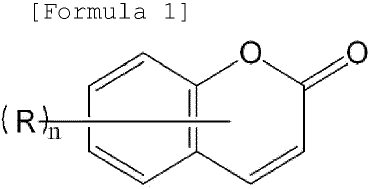

In Formula 1 above, R each independently includes halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer selected from 0 to 6.

The non-aqueous electrolyte according to the present disclosure includes, as an additive, a first additive containing a coumarin-based compound having a specific structural formula, and a second additive containing lithium fluoromalonato(difluoro)borate (LiFMDFB), lithium difluoro(oxalato)borate (LiDFOB), or the like. When both the first additive and the second additive are included in the non-aqueous electrolyte, a flexible, highly restorable, and highly durable film may be formed on the negative electrode. Accordingly, the lithium secondary battery according to the present disclosure forms the SEI film described above in a silicon-based negative electrode that provides concerns over electrolyte side reactions caused by extensive volume expansion to prevent SEI film breakage, the electrolyte side reactions, and an increase in resistance due to an increase in the thickness of the electrode film, and may thus improve performance of the lithium secondary battery, particularly high-temperature cycle lifespan performance and high-temperature storage performance.

Meanwhile, in the case of not using a silicon-based active material as a negative electrode active material, for example, when the above-described non-aqueous electrolyte is applied to a negative electrode containing a carbon-based active material alone, the use of the combined first and second additives may rather cause an increase in resistance, and may thus have insignificantly improved or rather reduced effects, compared to the case in which the first additive or the second additive is used alone.

### 1) Lithium salt

As a lithium salt used in the present disclosure, various lithium salts commonly used in non-aqueous electrolytes for lithium secondary batteries may be used without limitation. For example, the lithium salt may include Li⁺ as a cation, and may include at least any one of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, or (CF₃CF₂SO₂)₂N⁻ as an anion.

Specifically, the lithium salt may include at least one of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, or LiBETI (LiN(SO₂CF₂CF₃)₂). Specifically, the lithium salt may include at least one of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), or LiBETI (LiN(SO₂CF₂CF₃)₂).

The non-aqueous electrolyte may include the lithium salt at a concentration of 0.5 M to 5 M, specifically 0.8 M to 4 M, and more specifically 0.8 M to 2.0 M. When the concentration of the lithium salt satisfies the above range, lithium ion yield (Li⁺ transference number) and the dissociation degree of lithium ions are improved, and accordingly, batteries may have improved output characteristics.

### 2) Organic solvent

An organic solvent is a non-aqueous solvent commonly used in lithium secondary batteries and is not particularly limited as long as its decomposition due to an oxidation reaction or the like may be minimized in the charging/discharging process of secondary batteries.

Specifically, the organic solvent may include at least one of a cyclic carbonate-based organic solvent, a linear carbonate-based organic solvent, a linear ester-based organic solvent, or a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent that may well dissociate lithium salt in an electrolyte due to high permittivity as a highly viscous organic solvent, and specifically may include at least one of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, or vinylene carbonate, and may more specifically include at least one of ethylene carbonate (EC) or fluoroethylene carbonate (FEC), and may more specifically include fluoroethylene carbonate (FEC). The fluoroethylene carbonate (FEC) may form an SEI film having a high content of inorganic components such as LiF on the negative electrode, thereby increasing the durability of the SEI film, and this may lead to improvements in lifespan performance and storage characteristics, particularly when the fluoroethylene carbonate (FEC) is applied to a negative electrode including a silicon-based active material.

The linear carbonate-based organic solvent is an organic solvent having low viscosity and low permittivity, and may specifically include at least one of dimethyl carbonate (DMC), diethyl carbonate (DEC), dipropyl carbonate, ethylmethyl carbonate (EMC), methylpropyl carbonate, or ethylpropyl carbonate, and may more specifically include at least one of ethylmethyl carbonate (EMC) or diethyl carbonate (DEC), and may more specifically include diethyl carbonate (DEC). The diethyl carbonate is a symmetrical linear carbonate and is free from transesterification, and may thus preferably prevent degradation in reduction stability caused by generation of by-products from the transesterification reaction. The diethyl carbonate is particularly preferable when applied to a negative electrode containing a silicon-based active material.

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 5:95 to 40:60, specifically a volume ratio of 7:93 to 30:70, or a volume ratio of 8:92 to 30:70, and more specifically a volume ratio of 8:92 to 20:80. When the mixing ratio of the cyclic carbonate-based organic solvent and the linear carbonate-based organic solvent satisfies the above range, both high permittivity and low viscosity are satisfied, and excellent ionic conductivity may be achieved.

In addition, in order to prepare an electrolyte having high ionic conductivity, the organic solvent may further include at least one ester-based organic solvent selected from a linear ester-based organic solvent or a cyclic ester-based organic solvent, along with at least one carbonate-based organic solvent selected from the cyclic carbonate-based organic solvent or the linear carbonate-based organic solvent.

The linear ester-based organic solvent may specifically include at least one of methyl acetate, ethyl acetate, propyl acetate, methyl propionate, ethyl propionate, propyl propionate, or butyl propionate.

In addition, the cyclic ester-based organic solvent may specifically include at least one of γ-butyrolactone, γ-valerolactone, γ-caprolactone, σ-valerolactone, orε-caprolactone.

Meanwhile, the organic solvent may be used by adding an organic solvent commonly used in a non-aqueous electrolyte without limitation, when needed. For example, at least one organic solvent selected from an ether-based organic solvent, a glyme-based solvent, or a nitrile-based organic solvent may be further included.

As the ether-based solvent, any one of dimethyl ether, diethyl ether, dipropyl ether, methylethyl ether, methylpropyl ether, ethylpropyl ether, 1,3-dioxolane (DOL), or 2,2-bis(trifluoromethyl)-1,3-dioxolane (TFDOL), or a mixture of two or more thereof may be used, but is the embodiment is not limited thereto.

The glyme-based solvent, as a solvent having higher permittivity and lower surface tension than a linear carbonate-based organic solvent, and being less reactive with metal, may include at least one of dimethoxyethane (glyme, DME), diethoxyethane, digylme, tri-glyme, or tetra-glyme (TEGDME), but is not limited thereto.

The nitrile-based solvent may include at least one of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, or the like, but is not limited thereto.

### 3) additive

The additive includes a first additive and a second additive.

The first additive includes a compound represented by Formula 1 below.

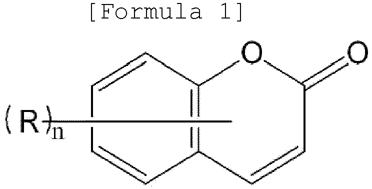

In Formula 1 above, R each independently includes halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer selected from 0 to 6.

The first additive includes a coumarin-based compound having the above-described structural formula, and the coumarin-based compound is highly reducible in a negative electrode, and upon initial activation of a lithium secondary battery, a ring structure is ring-opened, and thus a polyethylene oxide-based polymer-type SEI film is obtainable. The polymer-type SEI film is beneficial as having excellent flexibility and restorability. However, the SEI film derived from the first additive has poor durability, and accordingly, a second additive which will be described later needs to be used in combination with the first additive to achieve the effect of improving high-temperature cycle lifespan performance and high-temperature storage performance, which are the objectives of the present disclosure.

In an embodiment, in Formula 1 above, R may each independently comprise a propargyl group, an ester group, an ether group, a ketone group, a carboxy group, a substituted or unsubstituted alkenyl group, a substituted or unsubstituted alkynyl group, a boron group, a borate group, an isocyanate group, an isothiocyanate group, a silyl group, a siloxane group, a sulfone group, a sulfonate group, a sulfate group, or a combination of two or more thereof.

In an embodiment, in Formula 1 above, R may specifically each independently comprise halogen (halogen may be selected from F, Cl, Br, and I, and may specifically be F), a nitrile group, a propargyl group, an ester group, an ether group, or a combination of two or more thereof. These substituents exhibit excellent reducibility, are favorable in forming a polymer-type SEI film, and exhibit the excellent performance of delivering lithium ions, and thus are preferable.

In Formula 1 above, n may be an integer selected from 0 to 6, specifically, an integer selected from 1 to 6, and more specifically, n may be 1. In Formula 1 above, when n is 2 or greater, R may each be the same as or different from each other.

Specifically, the compound represented by Formula 1 above may comprise at least one a compound represented by Formula 2 below or a compound represented by Formula 3 below.

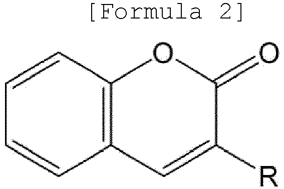

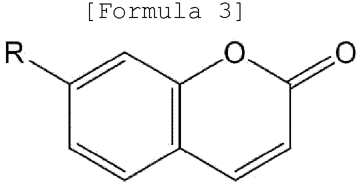

In Formulas 2 and 3 above, R is the same as defined in Formula 1 above.

The compounds represented by Formulas 2 and 3 each have a structure in which substituents are present at positions 3 and 7 (in accordance with IUPAC nomenclature) of a ring structure, and in this case, it is preferable in that the compounds are favorable in synthesizing at the position as described above compared to other substitution positions. In particular, in the case of the compound represented by Formula 2 in which a substituent is present at position 3, it is more preferable in that the uniformity of reactions is improved upon reducing to a negative electrode.

Specifically, the compound represented by Formula 1 above may include at least one selected from the group consisting of compounds represented by Formulas 4 to 12 below. The compound represented by Formula 1 may specifically include at least one selected from the group consisting of compounds represented by Formulas 4 to 7 below, in view of being more smoothly reduced to the negative electrode and more favorable in forming a polymer-type SEI film, and may more specifically include at least one selected from the group consisting of Formula 4, Formula 5, and Formula 7 below, and the compound represented by Formula 1 may even more specifically include the compound represented by Formula 4 below, in terms of being highly reducible, and having an excellent effect of inhibiting transition metal elution along with the above-described effects.

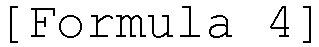

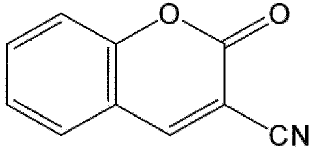

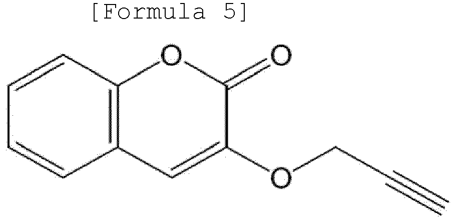

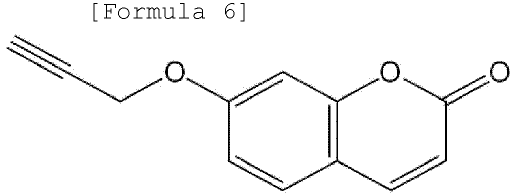

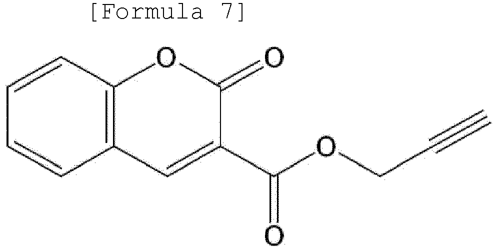

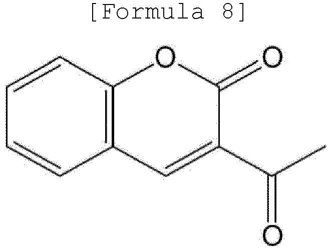

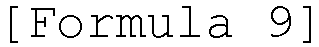

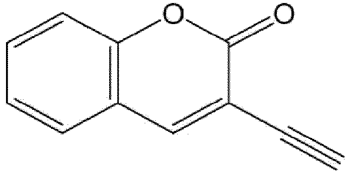

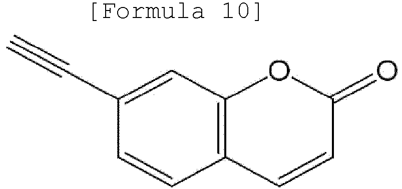

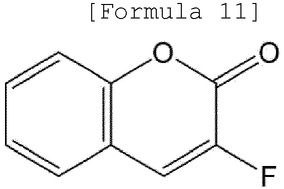

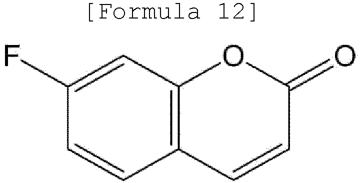

The non-aqueous electrolyte may include the first additive in an amount of 0.01 wt% to 10 wt%, specifically 0.05 wt% to 7 wt%, more specifically 0.1 wt% to 5 wt%, and more specifically 0.3 wt% to 2 wt%. When the amount of the compound represented by Formula 1 satisfies the above range, it is preferable in terms of sufficiently providing flexibility and restorability to the SEI film, and preventing an increase in resistance of a lithium secondary battery due to excessive addition, which causes degradation in lifespan performance.

The second additive may include at least one of lithium fluoromalonato(difluoro)borate (LiFMDFB), lithium difluoro(oxalato)borate (LiDFOB), lithium difluorophosphate (LiDFP), or lithium difluorobis-(oxalate)phosphate (LiDFOP).

The second additive may include a lithium salt additive containing fluorine, and the above-described lithium salt additive may form an inorganic-type SEI film such as LiF upon initial activation of a lithium secondary battery. The inorganic-type SEI film such as LiF has excellent adhesion to a negative electrode surface, but hardly covers the negative electrode surface entirely, making it difficult to sufficiently prevent electrolyte side reactions.

In this aspect, the non-aqueous electrolyte is characterized in that a first additive and a second additive which are capable of forming a polymer-type/inorganic-type composite SEI film are used in combination. According to the non-aqueous electrolyte according to the present disclosure, the polymer-type SEI film derived from the first additive covers the entire surface of the negative electrode to form an SEI film having excellent flexibility and restorability, and the inorganic-type SEI film derived from the second additive is distributed in the polymer-type SEI film, and accordingly, the SEI film may have improved durability. In addition, the first additive (coumarin-based compound) forms radicals upon a reduction reaction, and the radicals promote the release of fluorine contained in the second additive, and accordingly, the inorganic-type SEI film may be formed more smoothly. Therefore, the non-aqueous electrolyte according to the present disclosure may form an SEI film having flexibility, excellent restorability, and improved durability and strength on the negative electrode surface to prevent electrolyte consumption due to electrolyte side reactions over the running of batteries and an increase in resistance due to an increase in the thickness of an electrode film, resulting in improved performance of a lithium secondary battery, particularly high-temperature cycle lifespan performance and high-temperature storage performance. In particular, when the non-aqueous electrolyte according to the present disclosure is used with a negative electrode containing a silicon-based active material, an SEI film having flexibility and improved durability may be formed on a silicon-based active material having extensive volume expansion over charging and discharging, and accordingly, it is preferable in that damage to the SEI film due to the volume expansion of the silicon-based active material is prevented, and an increase in the thickness of the SEI film, which is caused by the surface exposure of a new silicon-based active material due to the volume expansion, and electrolyte consumption are prevented.

The second additive may specifically include at least one of lithium fluoromalonato(difluoro)borate (LiFMDFB) or lithium difluoro(oxalato)borate (LiDFOB), and in this case, it is preferable in terms of supporting the improvement in performance delivering lithium ions by contributing to the formation of a polymeric ether and LiF components, which are favorable in physical strength upon reduction at a negative electrode, and including an ester structure in the SEI film. In an embodiment, the second additive may specifically include lithium fluoromalonato(difluoro)borate (LiFMDFB). In an embodiment, the second additive may specifically include lithium difluoro(oxalato)borate (LiDFOB).

The non-aqueous electrolyte may include the second additive in an amount of 0.01 wt% to 10 wt%, specifically 0.05 wt% to 7 wt%, more specifically 0.1 wt% to 5 wt%, and more specifically 0.3 wt% to 2 wt%. When the amount of the compound represented by Formula 1 satisfies the above range, it is preferable in terms of sufficiently providing durability and strength to the SEI film, and preventing an increase in resistance of a lithium secondary battery due to excessive addition, which causes degradation in lifespan performance.

The first additive and the second additive are in a weight ratio of 5:95 to 95:5, specifically 10:90 to 92:8, more specifically 16:84 to 91:9, even more specifically 30:70 to 70: 30, and even more specifically 40:60 to 60:40, and when the weight ratio described above is satisfied, it is preferable in that both the flexibility and durability of the SEI film may be improved to a desired level.

The additive may further include an additional additive(or an third additive) along with the first additive and the second additive. The additional additive may be included in the non-aqueous electrolyte to prevent negative electrode collapse caused by decomposition of the non-aqueous electrolyte in a high-power setting, low-temperature high-rate discharge characteristics, high-temperature stability, and prevent overcharging, and suppressing battery swelling at high temperature.

Specifically, the additional additive may include at least one of vinylene carbonate, vinyl ethylene carbonate, propane sultone, propene sultone, succinonitrile, adiponitrile, ethylene sulfate, lithium bis-(oxalato)borate (LiBOB), tris(trimethylsilyl) phosphate (TMSPa), or tris(trimethylsilyl) phosphite (TMSPi), and may specifically be vinylene carbonate.

The non-aqueous electrolyte may include the additional additive in an amount of 0.1 wt% to 15 wt%.

In an embodiment, the electrolyte may not contain a silyl-containing additive.

The outer shape of the lithium secondary battery of the present disclosure is not particularly limited, and thus a cylindrical shape using a can, a prismatic shape, a pouch shape, or a coin shape, may be used.

Hereinafter, various embodiments of the present invention will be described in more detail through specific embodiments. However, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (Preparation of non-aqueous electrolyte)

As an organic solvent, a mixture of fluoro ethylene carbonate (FEC) and diethyl carbonate (DEC) at a volume ratio of 10:90 was used.

LiPF₆ as a lithium salt, a compound represented by Formula 4 as a first additive, LiFMDFB as a second additive, and vinylene carbonate (VC) as an additional additive were added to the organic solvent to prepare a non-aqueous electrolyte.

The LiPF₆ was included at a concentration of 1.5 M in the non-aqueous electrolyte.

The compound represented by Formula 4 was included in an amount of 0.5 wt% in the non-aqueous electrolyte, the LiFMDFB was included in an amount of 0.5 wt% in the non-aqueous electrolyte, and the vinylene carbonate used as the additional additive was included in an amount of 0.5 wt% in the non-aqueous electrolyte.

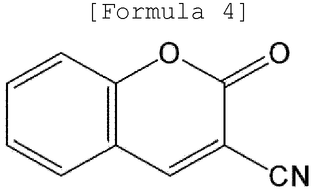

### (Preparation of lithium secondary battery)

A positive electrode active material (LiNi_{0.85}Co_{0.05}Mn_{0.07}Al_{0.03}O₂), a conductive material (carbon nanotube), and a binder (polyvinylidene fluoride) were added in a weight ratio of 97.74:0.70:1.56 to N-methyl-2-pyrrolidone (NMP) as a solvent to prepare a positive electrode mixture slurry (solid content: 75.5 wt%). The positive electrode mixture slurry was applied to one surface of a positive electrode current collector (Al thin film) having a thickness of 15 µm, and then dried and roll-pressed to prepare a positive electrode.

A negative electrode active material (Si), a conductive material (carbon black), and a binder (styrene-butadiene rubber) were added in a weight ratio of 70.0:20.3:9.7 to distilled water as a solvent to prepare a negative electrode mixture slurry (solid content: 26 wt%). The negative electrode mixture slurry was applied to one surface of a negative electrode current collector (Cu thin film) having a thickness of 15 µm, and then dried and roll-pressed to prepare a negative electrode.

A polyethylene porous film separator was interposed between the prepared positive and negative electrodes in a dry room, and then the prepared non-aqueous electrolyte was injected to prepare a secondary battery.

### Example 2

A non-aqueous electrolyte and a lithium secondary battery were prepared in the same manner as in Example 1, except that the first additive was added in an amount of 0.1 wt% to the non-aqueous electrolyte.

### Example 3

A non-aqueous electrolyte and a lithium secondary battery were prepared in the same manner as in Example 1, except that the first additive was added in an amount of 5.0 wt% to the non-aqueous electrolyte.

### Example 4

A non-aqueous electrolyte and a lithium secondary battery were prepared in the same manner as in Example 1, except that instead of the compound represented by Formula 4, the compound represented by Formula 5 below was included in an amount of 0.5 wt% as the first additive in the non-aqueous electrolyte.

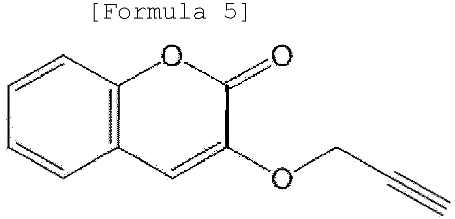

### Example 5

A non-aqueous electrolyte and a lithium secondary battery were prepared in the same manner as in Example 1, except that instead of the compound represented by Formula 4, the compound represented by Formula 6 below was included in an amount of 0.5 wt% as the first additive in the non-aqueous electrolyte.

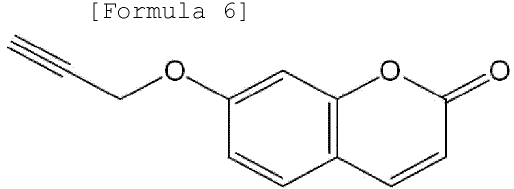

### Example 6

A non-aqueous electrolyte and a lithium secondary battery were prepared in the same manner as in Example 1, except that instead of the compound represented by Formula 4, the compound represented by Formula 7 below was included in an amount of 0.5 wt% as the first additive in the non-aqueous electrolyte.

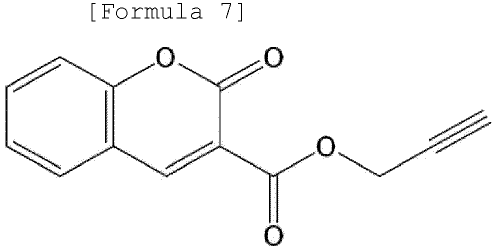

### Example 7

A non-aqueous electrolyte and a lithium secondary battery were prepared in the same manner as in Example 1, except that instead of LiFMDFB, LiDFP was included in an amount of 0.5 wt% as the second additive in the non-aqueous electrolyte.

### Example 8

A non-aqueous electrolyte and a lithium secondary battery were prepared in the same manner as in Example 1, except that instead of LiFMDFB, LiDFOB was included in an amount of 0.5 wt% as the second additive in the non-aqueous electrolyte.

### Example 9

A non-aqueous electrolyte and a lithium secondary battery were prepared in the same manner as in Example 1, except that the second additive was added in an amount of 0.1 wt% to the non-aqueous electrolyte.

### Example 10

A non-aqueous electrolyte and a lithium secondary battery were prepared in the same manner as in Example 1, except that the second additive was added in an amount of 5wt% to the non-aqueous electrolyte.

### Example 11

A non-aqueous electrolyte and a lithium secondary battery were prepared in the same manner as in Example 8, except that the second additive was added in an amount of 0.1 wt% to the non-aqueous electrolyte.

### Example 12

A non-aqueous electrolyte and a lithium secondary battery were prepared in the same manner as in Example 8, except that the second additive was added in an amount of 5wt% to the non-aqueous electrolyte.

### Comparative Example 1

A non-aqueous electrolyte and a lithium secondary battery were prepared in the same manner as in Example 1, except that the first additive and the second additive were not added.

### Comparative Example 2

A non-aqueous electrolyte and a lithium secondary battery were prepared in the same manner as in Example 1, except that the second additive was not added.

### Comparative Example 3

A non-aqueous electrolyte and a lithium secondary battery were prepared in the same manner as in Example 1, except that the first additive was not added.

**[Table 1]**

| | Non-aqueous electrolyte | | | | | | | |
|---|---|---|---|---|---|---|---|---|
| | Lit hiu m sal t (Li PF₆ ) | Organic solvent | Additive | | | | | |
| | Mol ar con cen tra tio n (M, wit h res pec t to non - aqu eous ele ctr oly te) | | 1st additive | | 2nd additive | | Additiona l Additive | |
| | | | Type | Amou nt (wt% , with resp ect to non-aque ous elec trol yte) | Type | Amou nt (wt% , with resp ect to non-aque ous elec trol yte) | Type | Amou nt (wt% , with resp ect to non-aque ous elec trol yte) |
| Example 1 | 1.5 | FEC:DEC (volume ratio 10:90) | Form ula 4 | 0.5 | LiFMDF B | 0.5 | VC | 0.5 |
| Example 2 | 1.5 | FEC:DEC (volume ratio 10:90) | Form ula 4 | 0.1 | LiFMDF B | 0.5 | VC | 0.5 |
| Example 3 | 1.5 | FEC:DEC (volume ratio 10:90) | Form ula 4 | 5.0 | LiFMDF B | 0.5 | VC | 0.5 |
| Example 4 | 1.5 | FEC:DEC(volu me ratio 10:90) | Form ula 5 | 0.5 | LiFMDF B | 0.5 | VC | 0.5 |
| Example 5 | 1.5 | FEC:DEC (volume ratio 10:90) | Form ula 6 | 0.5 | LiFMDF B | 0.5 | VC | 0.5 |
| Example 6 | 1.5 | FEC:DEC (volume ratio 10:90) | Form ula 7 | 0.5 | LiFMDF B | 0.5 | VC | 0.5 |
| Example 7 | 1.5 | FEC:DEC (volume ratio 10:90) | Form ula 4 | 0.5 | LiDFP | 0.5 | VC | 0.5 |
| Example 8 | 1.5 | FEC:DEC (volume ratio 10:90) | Form ula 4 | 0.5 | LiDFOB | 0.5 | VC | 0.5 |
| Example 9 | 1.5 | FEC:DEC (volume ratio 10:90) | Form ula 4 | 0.5 | LiFMDF B | 0.1 | VC | 0.5 |
| Example 10 | 1.5 | FEC:DEC (volume ratio 10:90) | Formula 4 | 0.5 | LiFMDF B | 5 | VC | 0.5 |
| Example 11 | 1.5 | FEC:DEC (volume ratio 10:90) | Form ula 4 | 0.5 | LiDFOB | 0.1 | VC | 0.5 |
| Example 12 | 1.5 | FEC:DEC (volume ratio 10:90) | Form ula 4 | 0.5 | LiDFOB | 5 | VC | 0.5 |
| Comparati ve Example 1 | 1.5 | FEC:DEC (volume ratio 10:90) | - | - | - | - | VC | 0.5 |
| Comparati ve Example 2 | 1.5 | FEC:DEC (volume ratio 10:90) | Form ula 4 | 0.5 | - | - | VC | 0.5 |
| Comparati ve Example 3 | 1.5 | FEC:DEC (volume ratio 10:90) | - | - | LiFMDF B | 0.5 | VC | 0.5 |

### Experimental Example

### Experimental Example 1: Evaluation of high-temperature cycle capacity retention

The lithium secondary batteries of Examples 1 to 12 and Comparative Examples 1 to 3 prepared above were charged up to 4.2 V in the conditions of CC/CV and 0.33 C at 45 °C using an electrochemical charger and discharger, and 300 cycles of charging and discharging were performed with discharging up to 3 V in the conditions of CC and 0.33 C as one cycle, and capacity retention was measured.

The capacity retention was calculated through the following Equation, and the results are shown in Table 2. Capacity retention (%) = {(discharge capacity after 300th cycle)/(discharge capacity after 1st cycle)} × 100

### Experimental Example 2: Evaluation of capacity retention after high-temperature storage

The lithium secondary batteries of Examples 1 to 12 and Comparative Examples 1 to 3 prepared above were charged up to 4.2 V/55 mA in the conditions of 0.33 C/4.2 V constant current/constant voltage (CC/CV) at room temperature and discharged up to 2.5 V in the condition of 0.33 C to perform initial charging and discharging, and then charged up to 4.2 V/55 mA in the conditions of 0.33 C/4.2 V constant current/constant voltage (CC/CV) at room temperature, and then stored at 60 °C. After storage, the secondary batteries were charged up to 4.2 V/55 mA in the conditions of 0.33 C/4.2 V constant current/constant voltage (CC/CV) at room temperature, and discharged up to 2.5 V in the condition of 0.33 C to measure the capacity upon discharging.

The capacity retention was evaluated according to the following formula, and the results are shown in Table 2 below. Capacity retention (%)=(discharge capacity after storage for N weeks/initial discharge capacity)×100
(where N is an integer of 1 or greater).

**[Table 2]**

| | Experimental Example 1 | Experimental Example 2 |
|---|---|---|
| | High-temperature cycle capacity retention (%, 300 cycles) | Capacity retention when stored for 8 weeks (%) |
| Example 1 | 90.8 | 95.4 |
| Example 2 | 85.4 | 91.2 |
| Example 3 | 83.6 | 88.9 |
| Example 4 | 82.5 | 87.1 |
| Example 5 | 81.8 | 85.9 |
| Example 6 | 84.5 | 90.3 |
| Example 7 | 83.1 | 88.5 |
| Example 8 | 89.7 | 94.8 |
| Example 9 | 88.5 | 93.1 |
| Example 10 | 85.6 | 90.8 |
| Example 11 | 87.2 | 92.6 |
| Example 12 | 84.9 | 88.4 |
| Comparative Example 1 | 74.4 | 80.4 |
| Comparative Example 2 | 76.8 | 81.2 |
| Comparative Example 3 | 79.6 | 83.7 |

Referring to Table 2, it is determined that the lithium secondary batteries of Examples 1 to 12 using the non-aqueous electrolyte including the first additive and the second additive according to the present disclosure had significantly improved high-temperature cycle lifespan performance and high-temperature storage performance, compared to the lithium secondary batteries of Comparative Examples 1 to 3.

### Reference Example

### Reference Example 1

### 1. Preparation of non-aqueous electrolyte

The same non-aqueous electrolyte used in Example 1 was used.

### 2. Preparation of lithium secondary battery

A positive electrode active material (Li[Ni_{0.85}Co_{0.03}Mn_{0.07}Al_{0.03}]O₂), a conductive material (carbon nanotube), and a binder (polyvinylidene fluoride) were added in a weight ratio of 97.74:0.70:1.56 to N-methyl-2-pyrrolidone (NMP) as a solvent to prepare a positive electrode mixture slurry (solid content: 75.5 wt%). The positive electrode mixture slurry was applied to one surface of a positive electrode current collector (Al thin film) having a thickness of 15 µm, and then dried and roll-pressed to prepare a positive electrode.

A negative electrode active material (natural graphite), a conductive material (carbon black), and a binder (styrene-butadiene rubber (SBR)-carboxymethyl cellulose (CMC)) were added in a weight ratio of 95.0:1.5:3.5 to distilled water as a solvent to prepare a negative electrode mixture slurry (solid content: 60 wt%). The negative electrode mixture slurry was applied to one surface of a negative electrode current collector (Cu thin film) having a thickness of 15 µm, and then dried and roll-pressed to prepare a negative electrode.

A polyethylene porous film separator was interposed between the prepared positive and negative electrodes in a dry room, and then the prepared non-aqueous electrolyte was injected to prepare a secondary battery.

### Reference Example 2

A secondary battery was prepared in the same manner as in Reference Example 1, except that the non-aqueous electrolyte used in Comparative Example 2 was used as a non-aqueous electrolyte.

### Reference Example 3

A secondary battery was prepared in the same manner as in Reference Example 1, except that the non-aqueous electrolyte used in Comparative Example 3 was used as a non-aqueous electrolyte.

### Reference Experimental Example 1

The lithium secondary batteries of Reference Examples 1 to 3 prepared above were charged up to 4.2 V in the conditions of CC/CV and 0.33 C at 45 °C using an electrochemical charger and discharger, and 300 cycles of charging and discharging were performed with discharging up to 3 V in the conditions of CC and 0.33 C as one cycle, and capacity retention was measured.

The capacity retention was calculated through the following Equation, and the results are shown in Table 3. Capacity retention (%) = {(discharge capacity after 300th cycle)/(discharge capacity after 1st cycle)} × 100

### Reference Experimental Example 2

The lithium secondary batteries of Reference Examples 1 to 3 prepared above were charged up to 4.2 V/55 mA in the conditions of 0.33 C/4.2 V constant current/constant voltage (CC/CV) at room temperature and discharged up to 2.5 V in the condition of 0.33 C to perform initial charging and discharging, and then charged up to 4.2 V/55 mA in the conditions of 0.33 C/4.2 V constant current/constant voltage (CC/CV) at room temperature, and then stored at 60 °C. After storage, the secondary batteries were charged up to 4.2 V/55 mA in the conditions of 0.33 C/4.2 V constant current/constant voltage (CC/CV) at room temperature, and discharged up to 2.5 V in the condition of 0.33 C to measure the capacity upon discharging.

The capacity retention was evaluated according to the following formula, and the results are shown in Table 3 below. Capacity retention (%)=(discharge capacity after storage for N weeks/initial discharge capacity)×100
(where N is an integer of 1 or greater).

**[Table 3]**

| | Reference | Reference |
|---|---|---|
| | Experimental Example 1 | Experimental Example 2 |
| | High-temperature cycle capacity retention (%, 300 cycles) | Capacity retention when stored for 8 weeks (%) |
| Reference Example 1 | 78.7 | 87.5 |
| Reference Example 2 | 80.4 | 89.2 |
| Reference Example 3 | 82.1 | 90.9 |

Referring to Table 3 above, when the non-aqueous electrolyte having the characteristics according to the present disclosure is applied to a negative electrode containing a carbon-based active material (Reference Example 1) alone, it is determined that the performance deteriorates compared to Reference Examples 2 and 3, which are different in that only any one of the first additive and the second additive is used. The carbon-based active material has less or insignificant volume expansion compared to the silicon-based active material, and accordingly, the polymer-type SEI film derived from the first additive rather acts as resistance, and it is believed that this resistance increase is further intensified when the first additive and the second additive are used together.

Accordingly, it is clearly understood that the effect of improving lifespan performance and storage performance of the present disclosure, in particular, the effect of improving high-temperature lifespan performance and high-temperature storage performance is achieved only when a negative electrode including a silicon-based active material is combined with the above-described non-aqueous electrolyte.

## Claims

1. A lithium secondary battery comprising:
a negative electrode; a positive electrode positioned opposite to the negative electrode; a separator disposed between the negative electrode and the positive electrode; and a non-aqueous electrolyte,
wherein the negative electrode comprises a negative electrode active material,
the negative electrode active material comprises a silicon-based active material,
the non-aqueous electrolyte comprises a lithium salt, an organic solvent, and an additive,
the additive comprises a first additive and a second additive,
the first additive comprises a compound represented by Formula **1,** and
the second additive comprises at least one of lithium fluoromalonato(difluoro)borate (LiFMDFB), lithium difluoro(oxalato)borate (LiDFOB), lithium difluorophosphate (LiDFP), or lithium difluorobis-(oxalate)phosphate (LiDFOP), 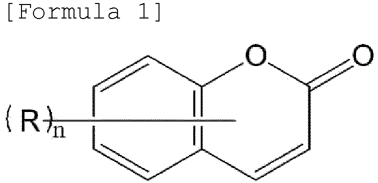
wherein in Formula **1,** R each independently comprises halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and
n is an integer selected from 0 to **6.**

2. The lithium secondary battery of claim **1,** wherein the compound represented by Formula 1 comprises at least one of a compound represented by Formula 2 or a compound represented by Formula **3:** 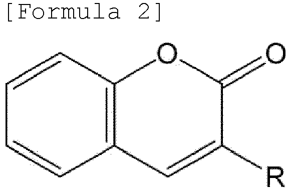 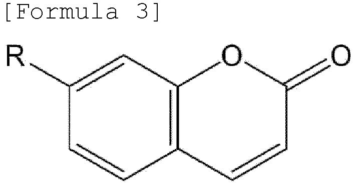 wherein in Formulas 2 and 3, R is the same as defined in Formula 1.

3. The lithium secondary battery of claim 1, wherein the compound represented by Formula 1 comprises at least one selected from the group consisting of compounds represented by Formulas 4 to 12:

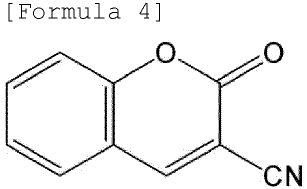

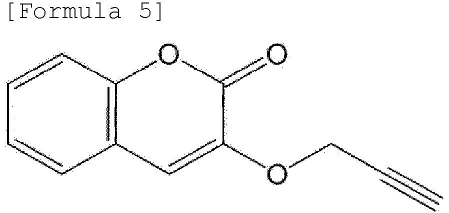

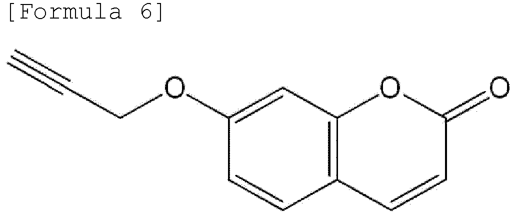

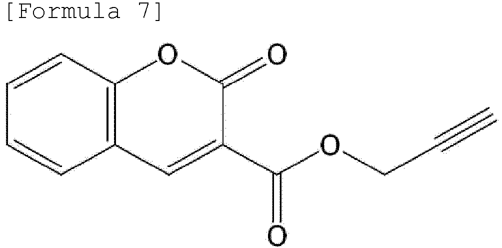

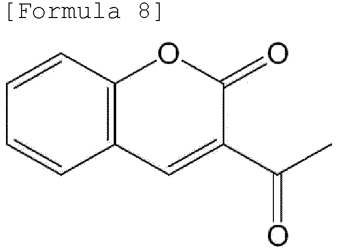

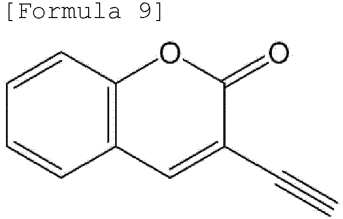

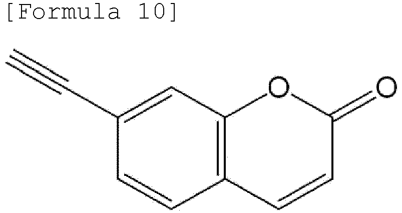

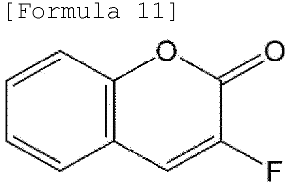

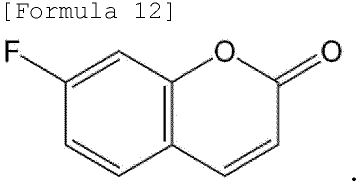

4. The lithium secondary battery of claim 1, wherein the non-aqueous electrolyte comprises the first additive in an amount of 0.01 wt% to 10 wt%.

5. The lithium secondary battery of claim 1, wherein the second additive comprises at least one of lithium fluoromalonato(difluoro)borate (LiFMDFB) or lithium difluoro(oxalato)borate (LiDFOB).

6. The lithium secondary battery of claim 1, wherein the non-aqueous electrolyte comprises the second additive in an amount of 0.01 wt% to 10 wt%.

7. The lithium secondary battery of claim 1, wherein the first additive and the second additive are in a weight ratio of 10:90 to 90:10.

8. The lithium secondary battery of claim 1, wherein the lithium salt comprises at least one of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, or LiBETI (LiN(SO₂CF₂CF₃)₂).

9. The lithium secondary battery of claim 1, wherein the non-aqueous electrolyte comprises the lithium salt at a molar concentration of 0.5 M to 5.0 M.

10. The lithium secondary battery of claim 1, wherein the organic solvent comprises at least one of a cyclic carbonate-based organic solvent, a linear carbonate-based organic solvent, a linear ester-based organic solvent, or a cyclic ester-based organic solvent.

11. The lithium secondary battery of claim 10, wherein the organic solvent comprises a cyclic carbonate-based organic solvent and a linear carbonate-based organic solvent,
the cyclic carbonate-based organic solvent comprises fluoroethylene carbonate, and
the linear carbonate-based organic solvent comprises diethyl carbonate.

12. The lithium secondary battery of claim 1, wherein the additive further comprises at least one third additive selected from vinylene carbonate, vinylethylene carbonate, propane sultone, propene sultone, succinonitrile, adiponitrile, ethylene sulfate, lithium bis-(oxalato)borate (LiBOB), tris(trimethylsilyl)phosphate (TMSPa), or tris(trimethylsilyl)phosphite (TMSPi).

13. The lithium secondary battery of claim 1, wherein the silicon-based active material comprises a compound represented by SiOₓ, wherein 0≤x<2.
